# EUROPÄISCHE PATENTSCHRIFT

(11) **EP 2 707 261 B1**
(45) Veröffentlichungstag und Bekanntmachung des Hinweises auf die Patenterteilung: **27.11.2019**
(21) Anmeldenummer: 12723408.6
(22) Anmeldetag: 08.05.2012
(51) Int. Cl.: B60T 7/04, B60Q 1/44

(54) **SENSORANORDNUNG ZUR ÜBERTRAGUNG EINER BREMSBETÄTIGUNGSINFORMATION**
SENSOR ARRANGEMENT FOR TRANSMITTING AN ITEM OF BRAKING OPERATION INFORMATION
SYSTÈME DE DÉTECTION DE TRANSMISSION D'INFORMATIONS CONCERNANT L'ACTIONNEMENT D'UN FREIN

(30) Priorität: 09.05.2011 DE 102011075534; 15.12.2011 DE 102011088753
(43) Veröffentlichungstag der Anmeldung: 19.03.2014
(73) Patentinhaber: Continental Teves AG & Co. OHG, 60488 Frankfurt am Main (DE)
(72) Erfinder: BURGDORF, Christian, 63075 Offenbach (DE); HARTMANN, Ralf, 65830 Kriftel (DE); LEHMANN, Sören, 65934 Frankfurt (DE); KURBASA, Josko, 35647 Waldsolms (DE)
(86) Internationale Anmeldenummer: PCT/EP2012/058466
(87) Internationale Veröffentlichungsnummer: WO 2012/152797

(56) Entgegenhaltungen:
- DE-U1-202004 009 835
- US-A1- 2007 279 207
- US-A1- 2009 105 919

## Beschreibung

Die Erfindung betrifft eine Sensoranordnung für ein Bremssystem zum Abbremsen eines Rades in einem Fahrzeug.

Aus Sicherheitsgründen müssen Fahrzeuge mit einer Bremsleuchte ausgestattet sein, die einem hinterherfahrenden Fahrzeug die Betätigung der Bremse durch ein Leuchtsignal anzeigt.

US 2007 279 207 A1 offenbart ein Bremslichtsystem mit einem Bremspositionssensor, der mit einem Controller verbunden ist.

Es ist Aufgabe der Erfindung, die Erfassung der Betätigung der Bremse zu verbessern.

Die Aufgabe wird durch die Merkmale des unabhängigen Anspruchs gelöst. Bevorzugte Weiterbildungen sind Gegenstand der abhängigen Ansprüche.

Die Erfindung schlägt vor, die Betätigung der Bremse aus der Lage eines die Bremse steuernden Bremspedals abzuleiten.

Der Erfindung liegt die Überlegung zugrunde, dass eine fahrerseitige Betätigung des Bremssystems üblicherweise mit kontaktlos arbeitenden Schaltern erfasst werden könnte. Diese Schalter könnten beispielsweise am Pedal oder am Tandem-Hauptzylinder angebracht sein, wobei nach Erfassung einer fahrerseitigen Bremsbetätigung über einen den Schalter enthaltenden Stromkreis eine entsprechende Bremsbetätigungsinformation beziehungsweise ein entsprechendes Bremsbetätigungssignal erzeugt und bereitgestellt werden kann.

Der Erfindung liegt die Überlegung zugrunde, dass in Bremssystemen, die bereits einen Wegsensor zur Erfassung der Lage des Bremspedals besitzen, der Schalter redundant ist, da sich aus der Lage des Bremspedals auch eine eindeutige Information ableiten lässt, ob das Bremspedal bewegt und damit die Bremse des Bremssystems betätigt wird, oder nicht.

Die Erfindung gibt daher eine Sensoranordnung für ein Bremssystem zum Abbremsen eines Rades in einem Fahrzeug an, die einen Wegsensor zum Erfassen einer Lage eines Bremspedals des Bremssystems umfasst, wobei der Wegsensor zum Erfassen einer Betätigung des Bremspedals basierend auf der Lage des Bremspedals und zum Ausgeben eines Signals vorgesehen ist, das die Betätigung des Bremspedals anzeigt.

Durch die Verwendung des Wegsensors zur Bremsbetätigungserfassung entfällt ein redundanter Schalter, was zu spürbaren Kosteneinsparungen führt. Zudem entfällt der notwendige Bauraum, um den redundanten Schalter inklusive seines Stromkreises aufzunehmen, wodurch auch deutliche Platzeinsparungen spürbar sind. Schließlich sinkt auch der Verdrahtungsaufwand beispielsweise auf Seiten des Fahrzeugherstellers, da der entfallene Schalter und sein Stromkreis nicht mehr in das Kommunikationsnetz des Fahrzeuges eingebunden werden muss.

Der Wegsensor ist bevorzugt zum Erfassen der Betätigung des Bremspedals vorgesehen, wenn die Lage des Bremspedals einen vorbestimmten Schwellwert überschreitet. Auf diese Weise kann mit einem einzigen Kriterium nicht nur die Betätigung sondern auch das Betätigungsende des Bremspedals und damit der Bremse des Bremssystems erfasst werden.

Alternativ oder zusätzlich kann der Wegsensor zum Erfassen der Betätigung des Bremspedals vorgesehen sein, wenn ein Gradient der Lage des Bremspedals einen von Null verschiedenen Wert aufweist. Auf diese Weise kann die Betätigung des Bremspedals unmittelbar aus der Nulllage des Bremspedals heraus erfasst werden, so dass nicht erst bis zu einem bestimmten Schwellwert gewartet werden muss.

Besonders günstig kann der Wegsensor dabei zum Aktivieren beziehungsweise Deaktivieren des Signals basierend auf Gradienten vorgesehen sein. Beispielsweise könnte durch das Erfassen eines von Null verschiedenen positiven Gradienten das Signal dauerhaft aktiviert werden, während durch das Erfassen eines von Null verschiedenen und negativen Gradienten das Signal dauerhaft deaktiviert wird, da aus dem Gradienten die Bewegungsrichtung des Pedals ersichtlich ist und so bestimmt werden kann, ob der Fahrer das Bremspedal gerade durchtritt oder dieses löst.

In einer anderen Weiterbildung der Erfindung ist im Signal die Lage des Bremspedals der Information, ob das Bremspedal betätigt wird, überlagert. Auf diese Weise können mit einem einzigen Datenkabel mehrere Informationen zu den der Sensoranordnung übergeordneten Schaltungseinheiten im Kommunikationsnetz des Fahrzeugs übertragen werden. Durch den reduzierten Verkabelungsaufwand können so Kosten, Platz und Herstellungsaufwand durch Verkabelung eingespart werden.

In einer besonderen Weiterbildung der Erfindung ist der Wegsensor zum Ausgeben eines weiteren Signals vorgesehen, das die Lage des Bremspedals anzeigt. Durch die getrennte Ausgabe des die Lage anzeigenden Signals und des die Bremsbetätigung anzeigenden Signals kann die Übermittlung der beiden Signale unabhängig voneinander nach verschiedenen Kriterien wie Ausfallsicherheit, Informationsdurchsatz, u.s.w. ausgelegt werden.

In einer bevorzugten Weiterbildung der Erfindung ist der Wegsensor zum Überlagern des Signals mit einer Versorgungsspannung des Wegsensors vorgesehen. Auf diese Weise lässt sich eine andere bereits im Bremssystem des Fahrzeugs vorhandene Leitung zur Übertragung des Signals heranziehen, um Verkabelungsaufwand zu reduzieren.

Die Erfindung gibt auch ein Bremssystem zum Bremsen wenigstens eines Rades eines Fahrzeug an, das ein Bremspedal zum Erzeugen eines Bremssignals basierend auf einer Lage des Bremspedals, eine angegebene Sensoranordnung und eine elektronische Kontrolleinheit zum Erfassen des Signals und zum Ausgeben eines Ansteuersignals für ein Anzeigemittel, wenn das Signal die Betätigung des Bremspedals anzeigt, umfasst.

Die Erfindung gibt auch ein Fahrzeug an, das wenigstens ein Rad und ein angegebenes Bremssystem zum Abbremsen des Rades umfasst.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 einen Teil eines Kommunikationsnetzes in einem Fahrzeug mit einem Wegsensor gemäß einen ersten Ausführungsbeispiel der Erfindung,
Fig. 2 einen Teil eines Kommunikationsnetzes in einem Fahrzeug mit einem Wegsensor gemäß einen zweiten Ausführungsbeispiel der Erfindung,
Fig. 3 einen Teil eines Kommunikationsnetzes in einem Fahrzeug mit einem Wegsensor gemäß einen dritten Ausführungsbeispiel der Erfindung, und
Fig. 4 einen Teil eines Kommunikationsnetzes in einem Fahrzeug mit einem Wegsensor gemäß einen vierten Ausführungsbeispiel der Erfindung zeigen.

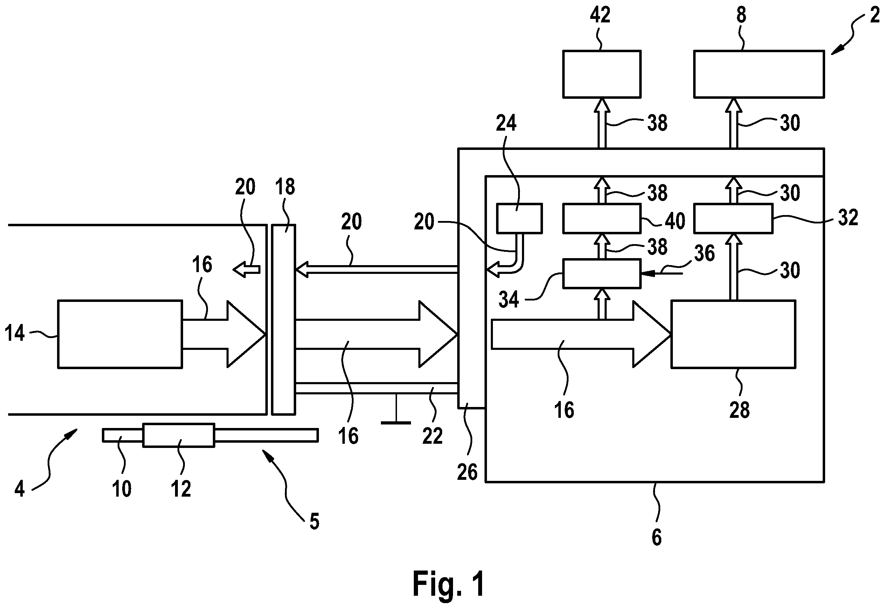

Es wird auf Fig. 1 Bezug genommen, die einen Teil eines Kommunikationsnetzes 2 in einem Fahrzeug mit einem Wegsensor 4 gemäß einen ersten Ausführungsbeispiel der Erfindung zeigt.

Der Wegsensor 4 umfasst eine Sensoreinrichtung 5 und eine elektronische Kontrolleinheit 6, nachstehend ECU 6 genannt, die zu einem nicht weiter dargestellten Bremssystem gehört. Die ECU kommuniziert mit einer zentralen Kraftfahrzeugkontrolleinheit 8.

Die Sensoreinrichtung 5 umfasst ein Sensorelement 10, das mit einem Bremspedal 12 des Fahrzeuges verbunden ist und die Lage des Bremspedals 12 als eine nicht weitere dargestellte Messgröße an einen Mikrocontroller 14 in der Sensoreinrichtung 5 abgibt. Die Lage des Bremspedals 12 kann dabei eine Weg- und/oder Winkelgröße sein. Der Mikrocontroller 14 wandelt die Lage des Bremspedals 12 in ein elektronisches Messsignal 16 und gibt es über eine Schnittstelle 18 an die ECU 6 aus. Ferner wird die Sensoreinrichtung 5 über die Schnittstelle 18 aus der ECU 6 mit einer Versorgungsspannung 20 gegenüber einem Massepotential 22 versorgt.

Die ECU 6 weist eine Spannungsquelle 24 auf, aus der sie die Versorgungsspannung 20 über eine in der ECU 6 vorhandene Schnittstelle 26 abgibt. Die ECU 6 weist ferner einen eigenen Mikrocontroller 28 auf, der das die Lage des Bremspedals enthaltende Messsignal 16 empfängt und elektronisch aufbereitet. Die Aufbereitung kann beispielsweise eine Rauschfilterung und/oder eine Codierung des Messsignals 16 umfassen. Das aufbereitete Messsignal 30 wird anschließend über einen Transceiver 32 und die Schnittstelle 26 an die Kraftfahrzeugkontrolleinheit gesendet, die das aufbereitete Messsignal 30 beispielsweise zu Regelungszwecken im Rahmen des Antiblockiersystems nutzen kann. Neben dem Mikrocontroller 28 weist die ECU 6 einen Signaldecoder 34 auf, der ebenfalls das elektronische Messsignal 16 empfängt. Der Signaldecoder 34 analysiert das Messsignal 16 auf eine Betätigung des Bremspedals 12 hin. Dazu kann der Signaldecoder 34 beispielsweise das Messsignal 16 einem Schwellenwert 36 gegenüberstellen und die Betätigung des Bremspedals 12 als ein Betätigungssignal 38 ausgeben, wenn das Messsignal 16 den Schwellenwert 36 überschreitet. Der Schwellenwert 36 kann dem Signaldecoder 34, wie gezeigt, extern zugeführt werden oder intern im Signaldecoder 34 abgespeichert sein. Alternativ oder zusätzlich kann der Signaldecoder 34 beispielsweise eine Änderung des Messsignals 16 beispielsweise basierend auf dem Gradienten des Messsignals 16 ermitteln und so auf eine Betätigung des Bremspedals 12 rückschließen. Um zu Bestimmen, ob der Fahrer die Bremse schließt oder öffnet, kann der Signaldecoder 34 beispielsweise das Vorzeichen des Gradienten betrachten. Ändert sich das Messsignal 16 und der Fahrer schließt die Bremse, so schaltet der Signaldecoder 34 das Betätigungssignal 38 ein. Ändert sich das Messsignal 16 und der Fahrer öffnet die Bremse, so schaltet der Signaldecoder 34 das Betätigungssignal 38 aus. Das Betätigungssignal 38 wird in der ECU 6 über einen Hardwareausgang 40 und die Schnittstelle 26 direkt an eine Bremslichtanlage 42 ausgegeben, um diese in Betrieb zu setzen.

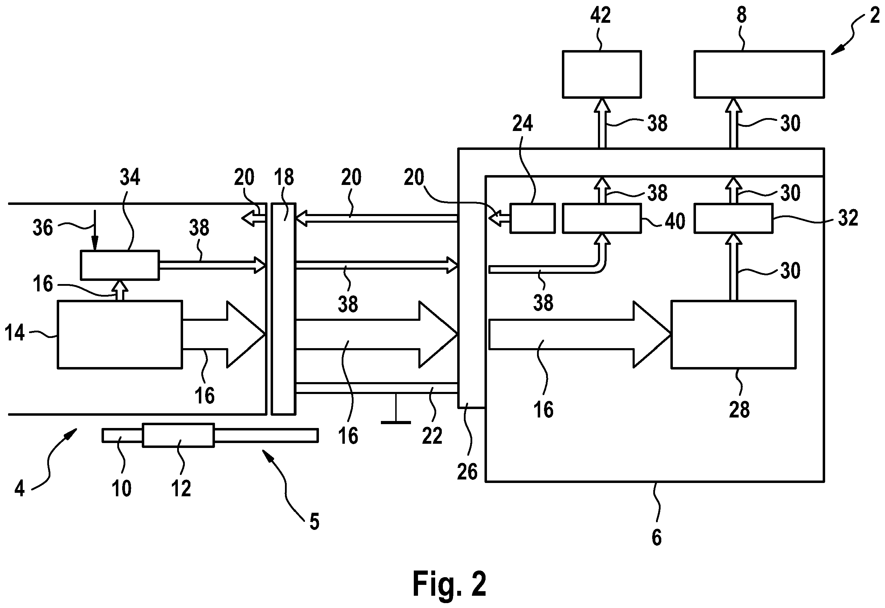

Es wird auf Fig. 2 Bezug genommen, die einen Teil eines Kommunikationsnetzes 2 in einem Fahrzeug mit einem Wegsensor 4 gemäß einem zweiten Ausführungsbeispiel der Erfindung zeigt. In Fig. 2 werden zu Fig. 1 gleiche Elemente mit gleichen Bezugszeichen versehen und nicht noch einmal beschrieben.

Im Ausführungsbeispiel der Fig. 2 befindet sich der Signaldecoder 34 in der Sensoreinrichtung 5. Das Betätigungssignal 38 wird dabei über eine eigene Leitung über die Schnittstelle 18 der Sensoreinrichtung 5 zur Schnittstelle 26 der ECU 6 und schließlich zum Hardwareausgang 40 übertragen.

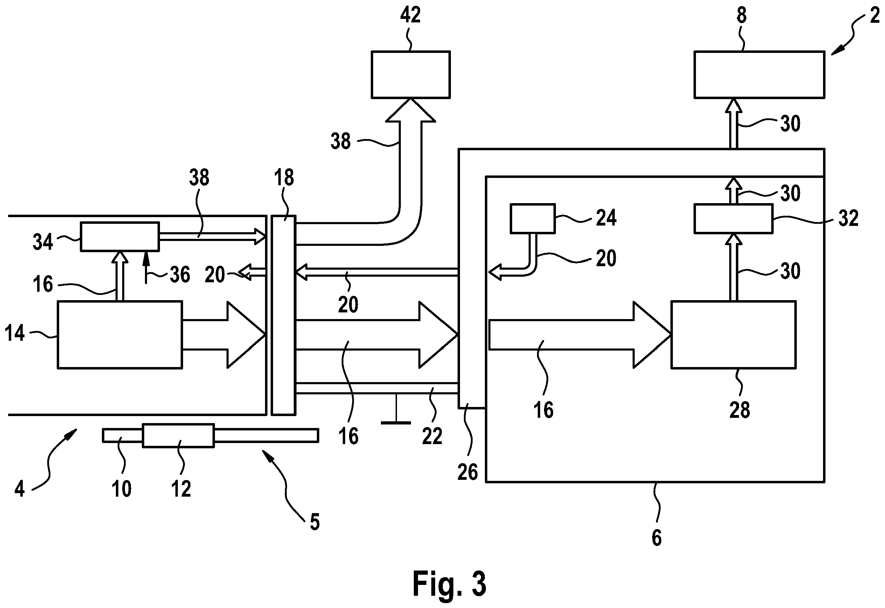

Es wird auf Fig. 3 Bezug genommen, die einen Teil eines Kommunikationsnetzes 2 in einem Fahrzeug mit einem Wegsensor 4 gemäß einem dritten Ausführungsbeispiel der Erfindung zeigt. In Fig. 3 werden zu Fig. 1 und 2 gleiche Elemente mit gleichen Bezugszeichen versehen und nicht noch einmal beschrieben.

Im Ausführungsbeispiel der Fig. 3 befindet sich der Signaldecoder 34 wieder in der Sensoreinrichtung 5. Diesmal wird das Betätigungssignal 38 direkt an die Bremslichtanlage 42 ausgegeben, ohne die ECU 6 zu passieren. Störungen der ECU 6 haben daher auf die Funktion der Bremslichtanlage 42 keinen Einfluss.

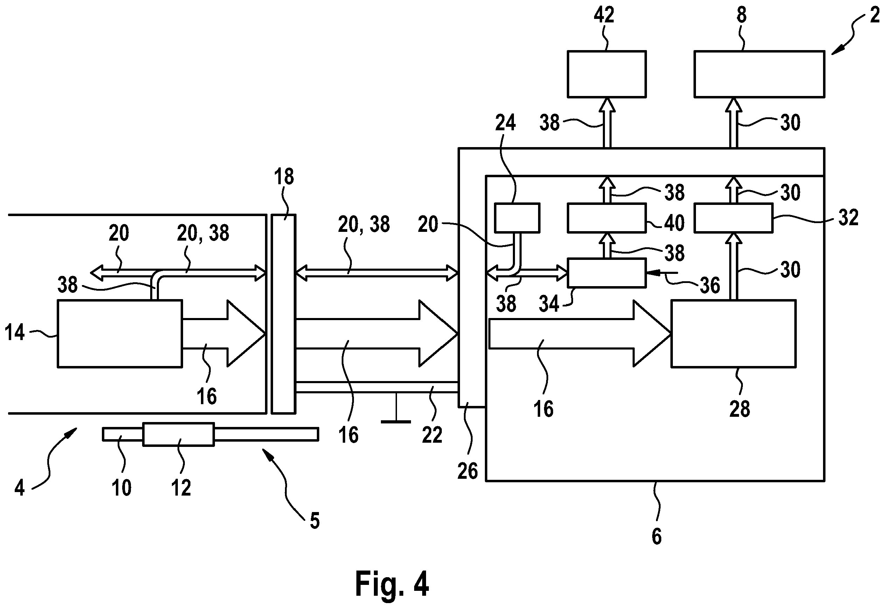

Es wird auf Fig. 4 Bezug genommen, die einen Teil eines Kommunikationsnetzes 2 in einem Fahrzeug mit einem Wegsensor 4 gemäß einem vierten Ausführungsbeispiel der Erfindung zeigt. In Fig. 4 werden zu Fig. 1 und 2 gleiche Elemente mit gleichen Bezugszeichen versehen und nicht noch einmal beschrieben.

Im Ausführungsbeispiel der Fig. 4 befindet sich der Signaldecoder 34 wieder in der Sensoreinrichtung 5. Diesmal wird das Betätigungssignal 38 auf die Versorgungsspannung 20 aufmoduliert und so über die Leitung der Versorgungsspannung 20 zwischen der Sensoreinrichtung 5 und der ECU 6 übertragen. Die Modulation kann beispielsweise durch eine einfache Superposition der Versorgungsspannung 20 und dem Betätigungssignal 38 erfolgen.

## Patentansprüche

1. Sensoranordnung für ein Bremssystem zum Abbremsen eines Rades in einem Fahrzeug umfassend
- einen Wegsensor (4) zum Erfassen einer Lage eines Bremspedals (12) des Bremssystems, wobei der Wegsensor (4) zum Erfassen einer Betätigung des Bremspedals (12) basierend auf der Lage des Bremspedals (12) und zum Ausgeben eines Betätigungssignals (38) vorgesehen ist, das die Betätigung des Bremspedals (12) anzeigt, und
- einen im Wegsensor enthaltenen Mikrocontroller (14) zum Umwandeln der Lage des Bremspedals (12) in ein elektronisches Messsignal (16),
**dadurch gekennzeichnet, dass** der Wegsensor (4) einen Signaldecoder (34) zum Analysieren des Messsignals (16) und zum Ausgeben des Betätigungssignals (38) aufweist.

2. Sensoranordnung nach Anspruch 1, wobei der Signaldecoder (34) das Messsignal (16) einem Schwellenwert (36) gegenüberstellt und die Betätigung des Bremspedals 12 als ein Betätigungssignal (38) ausgibt, wenn das Messsignal (16) den Schwellenwert (36) überschreitet.

3. Sensoranordnung nach Anspruch 1 oder 2, wobei der Signaldecoder (34) das Messsignal (16) basierend auf einem Gradienten (36) ermittelt und die Betätigung des Bremspedals 12 als ein Betätigungssignal (38) ausgibt, wenn ein Gradient der Lage (16) des Bremspedals (12) einen von Null verschiedenen Wert aufweist.

4. Sensoranordnung nach Anspruch 3, wobei der Signaldecoder (34) zum Aktivieren oder Deaktivieren des Betätigungssignals (38) basierend auf Gradienten vorgesehen ist.

5. Sensoranordnung nach einem der vorstehenden Ansprüche, wobei im Signal (38) die Lage (16) des Bremspedals der Information, ob das Bremspedal (12) betätigt wird, überlagert ist.

6. Sensoranordnung nach einem der vorstehenden Ansprüche, wobei der Wegsensor (4) zum Ausgeben eines weiteren Signals vorgesehen ist, das die Lage (16) des Bremspedals (12) anzeigt, wobei das Messsignal (16) und das Betätigungssignal (38) getrennt ausgebbar sind.

7. Sensoranordnung nach einem der vorstehenden Ansprüche, wobei der Wegsensor (4) zum Überlagern des Signals (38) mit einer Versorgungsspannung (20) des Wegsensors (4) vorgesehen ist.

8. Bremssystem zum Bremsen wenigstens eines Rades eines Fahrzeug umfassend
- ein Bremspedal (12),
- eine Sensoranordnung nach einem der vorstehenden Ansprüche, und
- eine elektronische Kontrolleinheit (6) zum Erfassen des Messsignals (16) und des Betätigungssignals (38) und zum Ausgeben eines Ansteuersignals für ein Anzeigemittel (42), wenn das Betätigungssignal (38) die Betätigung des Bremspedals (12) anzeigt.

9. Bremssystem zum Bremsen wenigstens eines Rades eines Fahrzeug umfassend
- ein Bremspedal (12),
- eine Sensoranordnung nach einem der vorstehenden Ansprüche, und
- eine elektronische Kontrolleinheit (6) zum Erfassen des Messsignals (16), und
- eine Bremslichtanlage (42) an die das Betätigungssignal (38) vom Wegsensor (4) weitergeleitet wird.

10. Fahrzeug umfassend wenigstens ein Rad und ein Bremssystem nach Anspruch 7 oder 8 zum Abbremsen des Rades.

## Claims

1. Sensor arrangement for a brake system for braking a wheel in a vehicle, comprising
- a travel sensor (4) for sensing a position of a brake pedal (12) of the brake system, wherein the travel sensor (4) is provided for sensing an activation of the brake pedal (12) on the basis of the position of the brake pedal (12) and for outputting an activation signal (38) which indicates the activation of the brake pedal (12), and
- a microcontroller (14) which is contained in the travel sensor and has the purpose of converting the position of the brake pedal (12) into an electronic measurement signal (16),
**characterized in that** the travel sensor (4) has a signal decoder (34) for analysing the measurement signal (16) and for outputting the activation signal (38).

2. Sensor arrangement according to Claim 1, wherein the signal decoder (34) compares the measurement signal (16) with a threshold value (36) and outputs the activation of the brake pedal (12) as an activation signal (38) if the measurement signal (16) exceeds the threshold value (36) .

3. Sensor arrangement according to Claim 1 or 2, wherein the signal decoder (34) determines the measurement signal (16) on the basis of a gradient (36) and outputs the activation of the brake pedal (12) as an activation signal (38) if a gradient of the position (16) of the brake pedal (12) has a value which is different from zero.

4. Sensor arrangement according to Claim 3, wherein the signal decoder (34) is provided for activating or deactivating the activation signal (38) on the basis of gradients.

5. Sensor arrangement according to one of the preceding claims, wherein, in the signal (38), the position (16) of the brake pedal is superimposed on the information as to whether the brake pedal (12) is activated.

6. Sensor arrangement according to one of the preceding claims, wherein the travel sensor (4) is provided for outputting a further signal which indicates the position (16) of the brake pedal (12), wherein the measurement signal (16) and the activation signal (38) can be output separately.

7. Sensor arrangement according to one of the preceding claims, wherein the travel sensor (4) is provided for superimposing a supply voltage (20) of the travel sensor (4) on the signal (38).

8. Brake system for braking at least one wheel of a vehicle, comprising
- brake pedal (12),
- a sensor arrangement according to one of the preceding claims, and
- an electronic control unit (6) for sensing the measurement signal (16) and the activation signal (38) and for outputting an actuation signal for a display means (42) if the activation signal (38) indicates the activation of the brake pedal (12).

9. Brake system for braking at least one wheel of a vehicle, comprising
- a brake pedal (12),
- a sensor arrangement according to one of the preceding claims, and
- an electronic control unit (6) for sensing the measurement signal (16), and
- a brake light system (42) to which the activation signal (38) is passed on by the travel sensor (4).

10. Vehicle comprising at least one wheel and a brake system according to Claim 7 or 8 for braking the wheel.

## Revendications

1. Arrangement capteur pour un système de freinage pour le freinage d'une roue dans un véhicule, comprenant
- un capteur de course (4) destiné à détecter une position d'une pédale de frein (12) du système de freinage, le capteur de course (4) étant conçu pour détecter un actionnement de la pédale de frein (12) en se basant sur la position de la pédale de frein (12) et pour délivrer un signal d'actionnement (38) qui indique l'actionnement de la pédale de frein (12), et
- un microcontrôleur (14) contenu dans le capteur de course, destiné à convertir la position de la pédale de frein (12) en un signal de mesure électronique (16), **caractérisé en ce que** le capteur de course (4) possède un décodeur de signal (34) destiné à analyser le signal de mesure (16) et délivrer le signal d'actionnement (38).

2. Arrangement capteur selon la revendication 1, le décodeur de signal (34) comparant le signal de mesure (16) à une valeur de seuil (36) et délivrant l'actionnement de la pédale de frein (12) sous la forme d'un signal d'actionnement (38) lorsque le signal de mesure (16) dépasse la valeur de seuil (36).

3. Arrangement capteur selon la revendication 1 ou 2, le décodeur de signal (34) déterminant le signal de mesure (16) en se basant sur un gradient (36) et délivrant l'actionnement de la pédale de frein (12) sous la forme d'un signal d'actionnement (38) lorsqu'un gradient de la position (16) de la pédale de frein (12) présente une valeur différente de zéro.

4. Arrangement capteur selon la revendication 3, le décodeur de signal (34) étant conçu pour activer ou désactiver le signal d'actionnement (38) en se basant sur des gradients.

5. Arrangement capteur selon l'une des revendications précédentes, l'information indiquant si la pédale de frein (12) est actionnée étant superposée dans le signal (38) à la position (16) de la pédale de frein.

6. Arrangement capteur selon l'une des revendications précédentes, le capteur de course (4) étant conçu pour délivrer un signal supplémentaire qui indique la position (16) de la pédale de frein (12), le signal de mesure (16) et le signal d'actionnement (38) pouvant être délivrés séparément.

7. Arrangement capteur selon l'une des revendications précédentes, le capteur de course (4) étant conçu pour superposer le signal (38) avec une tension d'alimentation (20) du capteur de course (4).

8. Système de freinage destiné à freiner au moins une roue d'un véhicule, comprenant
- une pédale de frein (12),
- un arrangement capteur selon l'une des revendications précédentes, et
- une unité de commande électronique (6) destinée à détecter le signal de mesure (16) et le signal d'actionnement (38) et à délivrer un signal de commande pour un moyen d'indication (42) lorsque le signal d'actionnement (38) indique l'actionnement de la pédale de frein (12).

9. Système de freinage destiné à freiner au moins une roue d'un véhicule, comprenant
- une pédale de frein (12),
- un arrangement capteur selon l'une des revendications précédentes, et
- une unité de commande électronique (6) destinée à détecter le signal de mesure (16), et
- un équipement de feu stop (42) auquel le signal d'actionnement (38) est retransmis par le capteur de course (4).

10. Véhicule, comprenant au moins une roue et un système de freinage selon la revendication 7 ou 8.
